# EUROPEAN PATENT APPLICATION

(11) **EP 4 339 579 A1**
(43) Date of publication of application: **20.03.2024**
(21) Application number: 22195976.0
(22) Date of filing: 15.09.2022
(51) Int. Cl.: G01M 7/08, G01N 29/14, G01M 11/08, G01M 5/00

(54) **SOLID STRUCTURE WITH OPTICAL FIBER BASED ACOUSTIC INSPECTION DEVICES**

(71) Applicant: Nederlandse Organisatie voor toegepast-natuurwetenschappelijk Onderzoek TNO, 2595 DA 's-Gravenhage (NL)
(72) Inventor: DE JONG, Willem, 2595 DA 's-Gravenhage (NL); CHENG, Lun-Kai, 2595 DA 's-Gravenhage (NL); VAN NEER, Paul Louis Maria Joseph, 2595 DA 's-Gravenhage (NL); PIRAS, Daniele, 2595 DA 's-Gravenhage (NL); QUESSON, Benoit André Jacques, 2595 DA 's-Gravenhage (NL)
(74) Representative: V.O.

(57) **Abstract**

At least a part of an optical fiber is embedded in a solid structure with an accessible end of the optical fiber accessible from outside the structure. A plurality of photo-acoustic ultrasound emitters is present distributed along the embedded part of the optical fiber. The optical fiber furthermore comprises acoustic sensing regions in between said positions. Each of the ultrasound emitters comprises photo-acoustic conversion material adjacent the optical fiber at least at a position of the photo-acoustic ultrasound emitter along the optical fiber where the embedded optical fiber is configured to couple a non-zero fraction of intensity of light travelling in the embedded optical fiber out of the embedded optical fiber to said photo-acoustic conversion material.

## Description

### Field of the invention

The invention relates to ultrasound inspection of a solid structure such as a wind turbine vane, and more particularly to a solid structure comprising ultrasound emitters and receivers, an inspection arrangement comprising the solid structure and a method of inspecting such a structure.

### Background

A solid structure can be inspected by inspecting it for manufacturing flaws and/or wear and damage that arises during use by means of optically excited and/or detected acoustic signals, usually in the form of ultrasound. The ultrasound in the structure can be excited by absorption of the light in a photo-acoustic conversion material where the light emerges from the optical fiber. Ultrasound that has traveled through the structure can be detected by use of a Fiber Bragg Grating (FBG) in an optical fiber. The use of acoustic signals makes it possible to perform frequent, or even continuous inspection during use of the solid structure.

Ultrasound propagation measurement results are sensitive to properties of the solid structure along ultrasound propagation paths. Changes of these properties due to flaws anywhere along a propagation path can result in reduced or delayed transmission, scattering and reflection or to changes in excitation of the ultrasound wave modes in which the structure can be excited. Such changes affect detected signals at a position of detection of the ultrasound in the solid structure in response to excitation of the ultrasound at a position of excitation, usually both at the surface of the solid structure. Reduced or delayed transmission affects the result of transmission along the direct path between such positions. Scattering and reflection can give rise to contributions from new ultrasound propagation paths. By comparing measurement results with baseline measurement results it can be detected whether such changes have occurred due to flaws.

But there are limits on the length of the ultrasound propagation paths that can be used. Ultrasound must be detected at locations that are not so far apart that the ultrasound becomes too small to be detected reliably. Moreover, for inspection purposes, it may be needed to distinguish flaws at different locations and/or flaws of different type. Because of such requirements inspection of substantially all of a large solid structure using optically excited and/or detected ultrasound may require many optical fibers.

In some cases, the shape of the solid structure or anisotropy of its ultrasound propagation properties (e.g. in laminated solid structures) may also affect the inspection. The shape and anisotropy may severely affect ultrasound propagation.

From WO2020122728 it is known to measure fluid properties using ultrasound that is excited by light from an optical fiber and detected, after travelling at least partly through the fluid, by means of an FBG in the same optical fiber or in another optical fiber in the same package as the optical fiber from which the ultrasound was excited.

### Summary

Among others, it is an object to provide for improved acoustic monitoring of solid structures using a limited number of optical fibers to excite and detect ultrasound.

A solid structure as claimed in claim 1 is provided. By using photoacoustic ultrasound emitters on a part of an optical fiber that is embedded in a solid structure as well as acoustic sensing regions between the ultrasound emitters the number of optical fibers that needs to be embedded can be reduced. A light source system may be used to supply light pulses to an accessible end of the optical fiber, in order to cause photo-acoustic ultrasound emission. The accessible end may be directly accessible from outside the solid structure, or indirectly via an accessible light source and/or light detector that are coupled to the end of the optical fiber within the solid structure. The acoustic sensing regions may be used to sense ultrasound that has been reflected or scattered in the structure or results from excitation of ultrasound vibration modes of the structure in response to photo-acoustic emission from the same optical fiber, or from photo-acoustic ultrasound emitters in a further embedded fiber in the structure. By using an embedded optical fiber or fibers, the emitters and detectors are protected against damage and ultrasound coupling to the structure is improved.

This is particularly useful for laminated structures, wherein the optical fiber can be embedded between successive layers, e.g. between layers of differently ordered non-optical fibers, to detect damage including delamination. The solid structure may be a wind turbine vane, a pipe, or more generally an elongated structure extending around an axial direction (not necessarily in a circle),between a first and second end of the structure. The embedded optical fiber being embedded extending along the axial direction, or around the axial direction. With ultrasound emitters distributed in a ring around the axial direction the intensity of ultrasound modes traveling in the axial direction can be increased and with ultrasound emitters distributed along the ultrasound direction, intensity of ultrasound modes travelling at selected locations around the axial direction can be increased.

Sub-sets of the photo-acoustic ultrasound emitters may be concentrated in short length sections of the optical fiber. Although the length of the section may be longer than the average acoustic wavelength, successive positions within the section where light is coupled out from the optical fibers are preferably successively not more than an average acoustic wavelength, and more preferably at most half the average acoustic wavelength apart from each other (e.g. less than 5-50 millimeter apart). Such short length sections with multiple photo-acoustic ultrasound emitters can be used to increase the ultrasound intensity from such a section, and/or to broaden the emitted ultrasound spectrum by using photo-acoustic ultrasound emitters that provide for different ultrasound spectra in the same length section, and/or to create a directional emission pattern. A row of photo-acoustic ultrasound emitters with increasing thickness may be used to adjust the main ultrasound intensity direction.

In an embodiment the embedded optical fiber comprises tilted Fiber Bragg Gratings, FBGs of at least two groups associated with a respective different optical wavelength. Thus more photo-acoustic ultrasound emitters can be excited than with a single wavelength group.

Tilted FBGs from different ones of the groups may be present in the same length section, for example to enable configuration of the total ultrasound spectrum and/or the directional emission pattern. By supplying light pulses associated with the different groups, with controlled relative delays and/or intensities of the pulses, properties of the emitted ultrasound can be adapted.

In another embodiment tilted FBGs from different ones of the groups may be present in successive spaced sections. Thus photo-acoustic ultrasound emission from the successive spaced sections can be separated in time.

In an embodiment the embedded optical fiber is configured to couple successively greater fractions of the light travelling through the embedded optical fiber at successive ones of said positions out of the embedded optical fiber to the photo-acoustic conversion material. Thus it can be prevented that the reflection intensity from downstream photoacoustic ultrasound emitters decreases exponentially. For example for an integer number, N, of the successive ones of the positions of photo-acoustic ultrasound emitters, the fractions equal 1/(N-n), wherein n is a rank number of the successive ones of the positions

### Brief description of the drawing.

These and other objects and advantageous aspects will become apparent from a detailed description of exemplary embodiments with reference to the following figures.
Figure 1a-c show a wind turbine vane with embedded fiber optical devices;
Figure 2 shows an ultrasound emitter;
Figure 3 shows an ultrasound receiver;
Figure 4a,b schematically show systems of fiber optic devices;
Figure 5a,bshow fiber optic device with sections of ultrasound emitters;
Figure 6a-c show cross-sections of bundles;
Figure 6d-e show directions of maxima of direction dependent emission patterns;
Figure 7 shows a bundle of ultrasound optical fibers;
Figure 8 schematically shows a system with a bundle of optical fibers;
Figure 9 shows a bundle of ultrasound optical fibers.

### Detailed description of exemplary embodiments

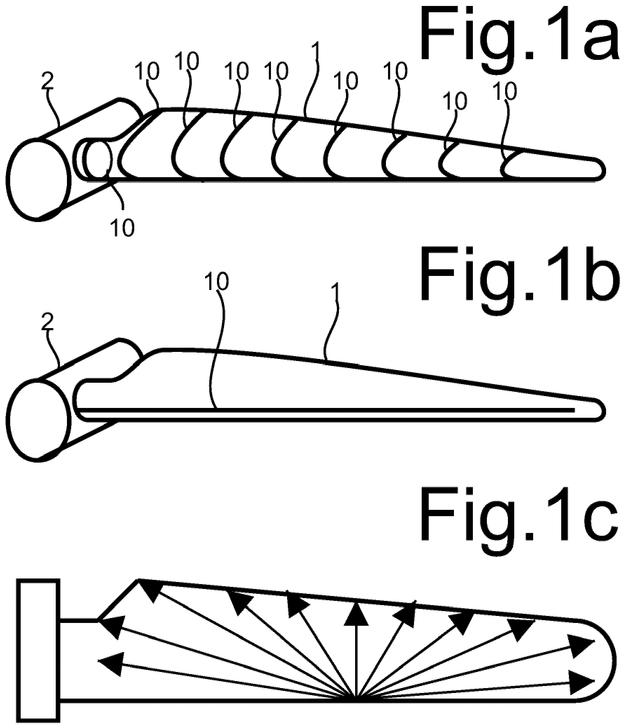

Figure 1a,b schematically show a wind turbine vane 1 as an example of solid structure under inspection, attached to a rotation axis 2. A wind turbine vane is an elongated solid structure that may be more than a hundred meters long and more than ten meters wide at certain places. Its thickness is smaller, and may even contain a hollow space. Such a solid structure may be made of laminated fiber material embedded in a resin, with layers of differently ordered fibers. Such a structure is able to handle significant stress along its length, but it could deteriorate due to impacts and local delamination. To inspect such a structure by means of ultrasound, ultrasound emitters and receivers may be used for emitting ultrasound into the structure and detecting ultrasound from the structure. Similar considerations apply when the solid structure is a (hollow) pipe.

In the embodiment of figure 1a,b the wind turbine vane 1 comprises one or more embedded optical fiber devices 10, each comprising a single mode optical fiber that is at least partly embedded in wind turbine vane 1, with an end that is accessible from outside the wind turbine vane 1. The accessible end may be directly accessible from outside the solid structure, or indirectly via an accessible light source and/or light detector that are coupled to the end of the optical fiber within the solid structure. When the structure is a laminated structure, the single mode optical fibers of each of the optical fiber devices 10 lie between successive layers of the structure. The structure may be manufactured by laying layer upon layer and laying up the single mode optical fiber on a layer before up a next layer. Each of the embedded single mode optical fibers may have a first part (not shown) extending towards rotation axis 2. The end of this part may extend outside wind turbine vane 1, or be coupled to an optical connector on the surface, to make the optical fiber accessible from outside wind turbine vane 1.

The optical fibers may be used as part of an optical inspection system that further comprises a light source system and a light detector system (not shown) that are configured to supply light to the optical fibers and detect one or more properties of light coming from the optical fibers. In the case of wind turbine vane 1, or other moving structure, the light source system and the light detector system may be located on a fixed part of the wind turbine. The light source system and a light detector system may have light outputs and inputs directed at a position or positions through which the accessible ends of the optical fibers pass during movement of wind turbine vane 1, or other moving structure.

In another embodiment, light source system and the light detector system may be located in or on the wind turbine vane, in combination with a wireless communication system to receive control commands for the light source system from outside the wind turbine vane and to transmit results from the light detector system. In this embodiment the light source system and the light detector system may be battery powered and/or photoelectrically powered.

Figure 1a schematically shows optical fiber devices 10 of which at least a second part extends along the circumference of wind turbine vane 1, at different positions along the length of wind turbine vane 1. Figure 1b schematically shows a position of an optical fiber device 10 extending along the length of wind turbine vane 1. Although a single optical fiber device 10 is shown for substantially the entire length, the second parts of a plurality of optical fiber devices 10 may be used to cover the entire length. Although optical fiber device 10 is shown embedded adjacent a leading edge of wind turbine vane 1, it may cross-sect the virtual plane perpendicular to the length direction anywhere in that plane. Although not shown, a further optical fiber device 10 may be present, e.g. at a position diametrically opposed to that of optical fiber device 10 shown in figure 1b.

Each optical fiber device comprises a series of ultrasound emitters and ultrasound receivers along the length of the embedded single mode optical fiber. Preferably the ultrasound emitters and ultrasound receivers in each optical fiber device are provided alternately along the length of the single mode optical fiber in the second part, or alternately in groups of more than one ultrasound emitter and/or more than one ultrasound receiver. No ultrasound emitters or ultrasound receivers need be provided along the first part. Figure 1c shows directions of maxima of direction dependent emission patterns emitted from an emission position in an wind turbine vane 1.

The ultrasound emitters may be used in the embodiment of figure 1a for example to produce (among others) ultrasound waves that have a travel direction component in the length direction of wind turbine vane 1. The ultrasound emitters may be used in the embodiment of figure 1b for example to produce (among others) ultrasound waves that have a travel direction component perpendicular to the length direction of wind turbine vane 1.

The ultrasound emitters may be realized by photo-acoustic conversion material adjacent the single mode optical fibers. In each ultrasound material, the photo-acoustic conversion material may have the form of discrete body of photo-acoustic conversion material located where light emerges from the optical fiber. The embedded single mode fiber may be configured to couple fractions of the intensity of the light that propagates in the single mode optical fiber from the single mode optical fiber to these bodies, so that the intensity of the propagating light diminishes step by step at each emitter. Alternatively, the photo-acoustic conversion material may have the form of a continuous layer of photo-acoustic conversion material surrounding the optical fiber, or a volume of photo-acoustic conversion material wherein the optical fiber is embedded. Thus, regions in the layer or volume of photo-acoustic conversion material that receive the reflected light will act as a plurality of integrated bodies in the respective ultrasound receivers. The photo acoustic material is a light absorbing material that changes size and/or shape when it absorbs light. This material may be realized for example by including optical absorber particles (e.g. ink particles) in a transparent material, e.g. PDMS/PEEK. By way of example, tilted FBGs (optionally including phase shifted FBGs, such as pi shifted FBGs) may be used to couple the fractions of the intensity of the light to such bodies. Other ways of configuring the optical fiber to couple out a fraction of the light include locally removing the cladding of the single mode optical fiber, locally providing another fiber core next to the fiber core etc. Although figure 1 is used to describe a preferred embodiment with a single mode optical fiber, i.e. an optical fiber with a fiber core that supports only a single mode of light at the wavelength that is reflected by the tilted and/or polarization variants of that mode, instead a multi-mode fiber core 12 may be used. When a multi-mode core is used, the tilted FBG may be configured to reflect optical power from one or more of the modes from the optical fiber core, preferably from its fundamental mode, and the coupling to a light source may be configured to couple light to the fiber core so that a major part of the optical power in the fiber core (e.g. ninety percent) is in the selected mode. When a multimode core is used, a few-mode optical fiber core is preferably used (e.g. supporting no more than two or three modes and their polarization variants). Use of a single mode fiber core has the advantage that the risk of instability of the reflected optical power due to bending, clamping etc. of the fiber core can be reduced or avoided. The risk of such instability is reduced when the number of modes supported by the fiber core is reduced.

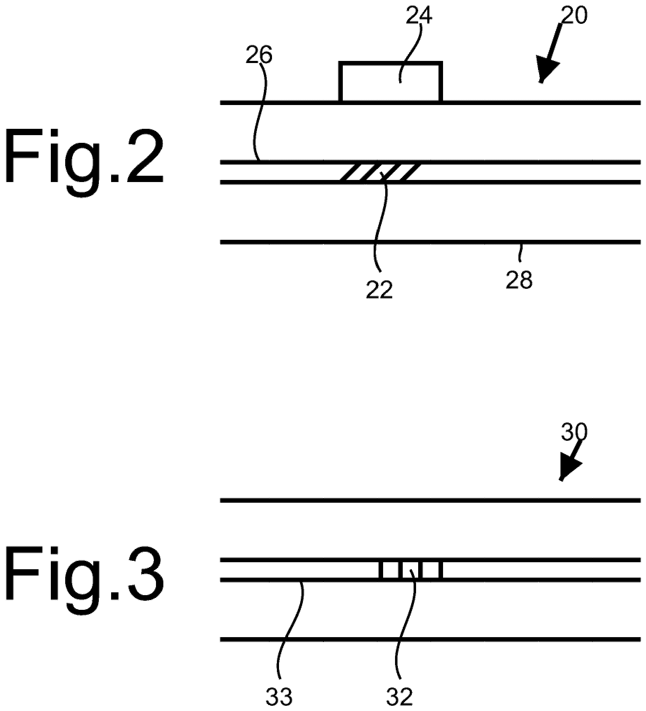

Figure 2 shows an exemplary ultrasound emitter in a fiber optical device that uses a tilted Fiber Bragg Grating (FBG) 22. By way of example, the fiber optical device comprises a single mode optical fiber 20 comprising a fiber core 26 and a cladding layer 28, with a tilted FBG 22 in fiber core 26 and a body 24 of light absorbing material on cladding layer at a position where body 24 receives reflected light from tilted FBG 22. (The figure is not to scale: in a single mode fiber the cladding is usually much thicker than the core). Tilted FBGs are known per se. At a tilted FBG, the index of refraction fiber core 26 along the optical axis of optical fiber 20 is spatially modulated in a periodic pattern. The gradient direction of the spatial variation of the index of refraction in FBG 22 at the optical axis is tilted relative to the optical axis (i.e. the tilt angle, the angle between the optical axis and the gradient, is non-zero). The modulation may be created for example by heating the optical fiber with a periodic heating pattern e.g. to create a periodic doping profile.

The tilt angle is chosen to cause a fraction of the light propagating along optical fiber 20 through FBG 22 to be reflected out of fiber core 26 at FBG 22, e.g. in a range of thirty to sixty degrees and preferably forty five degrees. Due to the periodicity of the grating, coherent reflection from tilted FBG 22 occurs only for light at specific wavelengths, where coherent reflection from successive spatial periods occurs. Body 24 of light absorbing material is located to receive the light that is reflected out of optical fiber 20 at FBG 22. The radial thickness of body 24 may be selected so as to absorb most of the light that penetrates it and its length may be at least so long that it covers the length of cladding layer to which the reflected light is directed. Furthermore, size and/or shape of body 24 and/or its material properties such as its stiffness may be adapted according to the desired ultrasound wavelength or wavelength range, e.g. due to resonance effects.

Instead of photo-acoustic conversion material in the form of discrete bodies on the cladding layer, the photo-acoustic conversion material may have the form of a continuous layer of photo-acoustic conversion material surrounding the cladding layer, or a volume of photo-acoustic conversion material wherein the optical fiber is embedded. Thus, regions in the layer of photo-acoustic conversion material that receive the reflected light will act as a plurality of integrated bodies in the respective ultrasound receivers. In a structure made of laminated fiber material embedded in a resin, for example, optical absorber particles (e.g. ink particles) may be included in the resin, at least where the optical fiber is embedded in the laminated structure. Alternatively, optically absorbing non-optical fibers in the structure in the neighborhood of the optical fibers or the entire structure may be made of photo-acoustic conversion material.

In operation, ultrasound may be generated by transmitting a short optical pulse of light through optical fiber 20 (e.g. a few nanoseconds long), with an optical wavelength at which coherent reflection occurs from tilted FBG 22. This has the effect that the reflected light will cause a heating pulse in body 24 and consequent expansion, which causes an ultrasound pulse outside optical fiber 30, with spectral ultrasound content mainly in a range of ultrasound frequencies that depends on the size and/or shape of body 24.

In principle, the spectral ultrasound content caused by an optical pulse may be characterized by its average acoustic wavelength, formally the integral over the wavelength of a product of the wavelength with the acoustic spectral intensity at that wavelength, divided by an integral over the wavelength of the acoustic spectral intensity as a function of wavelength. Alternatively, the peak wavelength may be used to characterize the spectral ultrasound content, formally the wavelength at which the acoustic spectral intensity is maximal, or the median acoustic wavelength between acoustic wavelengths where the spectral intensity is a predetermined fraction of the peak spectral intensity. What is disclosed here in terms of the average wavelength generally also applies in terms of the peak wavelength or such a median wavelength.

The average wavelength and the peak wavelength depends on the size and/or shape of body 24 and, in case of a thick body, on its optical absorption length, or if a continuous layer of photo-acoustic conversion material is used, on the thickness of that layer and, for a thick layer, on the optical absorption length in the layer. If a volume of photo-acoustic conversion material is used, the average wavelength and the peak or median wavelength may depend on the optical absorption length in the volume. A photo-acoustic conversion material with an optical wavelength dependent optical absorption length may be used, to make the average wavelength and the peak or median wavelength dependent on the optical wavelength.

Although the embodiment of figure 2 uses a tilted FBG to couple optical power from the fiber core to the photo-acoustic conversion material, it should be noted that other forms of coupling may be used.

Figure 3 shows an ultrasound receiver comprising an optical fiber 30 with an acoustic sensing region. In the illustrated embodiment the acoustic sensing region is a Fiber Bragg Grating (FBG) 32 in the fiber core 33 and the fiber core 33 is a single mode fiber core. The gradient direction of spatial variation of the index of refraction in FBG 32 at the optical axis of optical fiber 30 may be directed along the optical axis. This has the effect that FBG 32 will significantly reflect light in optical fiber 30 only at wavelengths at which coherent reflection occurs from FBG. These wavelengths change when pressure is exerted on FBG 32, e.g. due to the arrival of ultrasound at FBG 32 from outside optical fiber 30. In operation, ultrasound may be detected from changes of the wavelength at which significant reflection occurs. For example, light may be transmitted through optical fiber 30 at or near a wavelength that is reflected absent incoming ultrasound and changes in the intensity light reflected through optical fiber 30 by FBG 32 may be measured to detect incoming ultrasound at FBG 32.

Although a Fiber Bragg Grating (FBG) 32 in the fiber core is shown as an acoustic sensing region in an optical fiber by way of example, it should be realized that other kinds of acoustic sensing regions may be used, such as an interferometric Fabry-Perot sensors implemented in the fiber core.

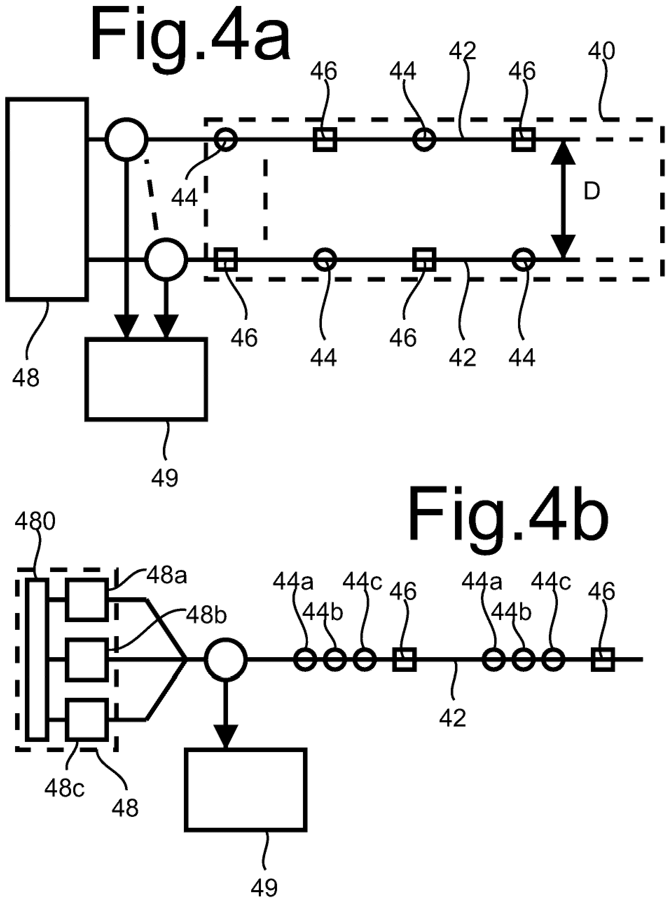

Figure 4a schematically shows the system with a connection arrangement of fiber optic devices (two shown but more similarly connected fiber optic devices may be present, or only one fiber optic device may be used). Each of the fiber optic devices comprises a single-mode optical fiber 42 embedded in a solid structure 40 like the wind turbine vane, at a distance D apart from each other (for example much more than an ultrasound wavelength apart: the ultrasound wavelength may be less that ten millimeter and D may be at least a hundred millimeter, or even at least one meter). Furthermore, each of the fiber optic devices comprises a series of ultrasound emitters 44 and ultrasound receivers 46 alternately along the length of its optical fiber 42. All of the ultrasound emitters 44 may be of the type shown in figure 2. Optionally, the last of the ultrasound emitters 44 along part or all of the optical fibers 42 may be located at the end of its optical fiber 42, in which case this ultrasound emitter 44 need not contain an FBG and may contain a body of light absorbing material that is located to receive light from the tip of the optical fiber 42.

At least during inspection, optical fibers 42 are connected to a light source system 48 and a light detector system 49. Light source system 48 is configured to produce pulses of light at the wavelength or wavelengths at which ultrasound emitters 44 reflect light that is used to produce ultrasound pulses, as well as measurement light at a wavelength or wavelengths at which ultrasound receivers 46 reflect light at some point during ultrasound vibrations. Light detector system 49 is configured to detect the effect of the incoming ultrasound on properties of the light from the FBGs in ultrasound receivers 46, e.g. on properties such as optical phase and/or intensity variation as a function of time.

The FBGs in ultrasound emitters 44 and ultrasound receivers 46 are configured to reflect light at different optical wavelengths. All of ultrasound emitters 44 or at least a group of ultrasound emitters 44 may be configured to reflect at a first optical wavelength that is used to generate ultrasound. The ultrasound emitters 44 that are configured to reflect at the first optical wavelength and that are not located at the tips of optical fiber 42 are designed to reflect only fractions of the light intensity of the light at the first wavelength in order to generate ultrasound and to pass the remainder of the intensity through the optical fiber 42. The fractions can be determined by selecting the amplitude of the spatial modulation of the refractive index of the fiber material and/or the number of periods in the spatial modulation pattern.

Preferably, the reflected fractions of those successive ultrasound emitters 44 that are configured to reflect at the first optical wavelength increase with the position of these ultrasound emitters 44 along optical fiber 42, so as to compensate at least partially for the reduction of the light intensity of light at the first optical wavelength along optical fiber 42 that is used to generate ultrasound.

For example, the reflected intensity in the different ultrasound emitters 44 that reflect light at the first optical wavelength can be equalized by setting the reflected fractions "f(n)" at successive positions labeled by "n" to f(n)=1/(N-n), where "N" is the number of ultrasound emitters 44 used in the same optical fiber 42. In an embodiment N is at least three and at most ten. When the ultrasound emitters 44 have the same light to ultrasound conversion efficiency, having the same intensity ensures that the emitted ultrasound has the same intensity at all ultrasound emitters 44 show that the signal to noise ratio does not vary with emitter position. Without adaptation (i.e. if f(n)=f(0) is independent of n), the reflected intensity I(n) and hence the generated ultrasound intensity at position n would decrease with position n according to the n-th power of (1-f(0)). When the reflected fractions increase with the position n this decrease is mitigated or suppressed, resulting in less difference in the signal to noise ratio for different emitter positions.

### Location of the fiber optical devices

For the purpose of providing for inspection over a large range of positions, the spacing between successive fiber optical devices as shown in figure 1a,b may be as large as possible without creating regions of the wind turbine vane, or other structure under inspection, to which no significant ultrasound signal is provided although these regions are critical for inspection. The fiber optical devices may be used to monitor properties of ultrasound transmission between successive positions where the embedded optical fibers of successive fiber optical devices extend around the circumference. In an embodiment wherein each fiber optical device comprises both emitters and receivers, each fiber can be used both to receive ultrasound waves from a preceding embedded fiber optical device and to transmit ultrasound to a next embedded fiber optical device, and/or to monitor ultrasound transmission in two directions along the length of the structure under inspection. Furthermore, scattering or reflection within a region of the structure under inspection may be monitored using a single embedded fiber optical device to emit ultrasound and to detect scattering and/or reflection of the emitted ultrasound.

A wind turbine vane is an example of an elongated structure which has an associated axial (length) direction and cross-sections with virtual planes perpendicular to the axial direction that varies at most slowly in shape and size with position of the virtual plane along the axial direction. At a wide range of axial positions the cross-sections may even contain a hollow space.

Dependent on the size of wind turbine vane 1, and more generally other elongated structures under inspection, vibration of the bodies 24 of photo-acoustic conversion material may give rise to the excitation of ultrasound wave modes of the structure under inspection. Use of a plurality of ultrasound emitters distributed around the circumference of the structure under inspection may be used to concentrate the excited ultrasound energy in a low order mode that propagates in the axial direction with a roughly homogeneous circumferential distribution.

In other embodiments, the embedded optical fiber of a fiber optical device may extend along the axial direction of wind turbine vane 1, and more generally other elongated structures under inspection. In one embodiment, one or more embedded fiber optical devices with an optical fiber that extends along the axial direction may be located near the surface of an elongated structure under inspection. When a plurality of such fiber optical devices is used, they may be spaced circumferentially from one another. In other embodiments, the embedded optical fiber of a fiber optical device may extend into the structure in a direction away from its surface.

In another embodiment, an embedded optical fiber that extends along the axial direction may be located at a central axis of an elongated structure under inspection and a spacing of the emitters may be chosen to support excitation of ultrasound with a propagation direction that at least has a direction component in the axial direction of the elongated structure under inspection (an axis will be referred to as a central axis if it extends in the axial direction and it is at equal distances to opposed surfaces of the structure that cross a line that perpendicularly intersects the central axis). A fiber optical device with an optical fiber along a central axis may be used to avoid excitation of ultrasound modes based on the fact that such modes have no mode amplitude at the central line, or to measure ultrasound properties of ultrasound modes that have little or no mode amplitude near the surface of the structure. A fiber optical device with an optical fiber along a central axis may be used to monitor the bulk of the elongated structure. Preferably, the optical fiber is a single mode optical fiber.

In an embodiment a single fiber optical device with an optical fiber embedded along a central axis, or a single set of one of more circumferentially spaced fiber optical devices embedded along the axial direction may be used at the axial position, e.g. to detect ultrasound scattering or reflection. In another embodiment a plurality of fiber optical devices with optical fibers embedded along such a central axis may be used, or a plurality of different sets of one of more circumferentially spaced fiber optical device embedded along the axial direction may be used at different axial positions e.g. to monitor ultrasound transmission through the structure between different fiber optical devices. In another embodiment a fiber optical device with an optical fiber embedded along a central axis may be combined with one or more fiber optical devices with an optical fiber (preferably a single mode optical fiber) in the axial direction closer to the surface, or even at the surface may be used.

### Ultrasound emitter groups using different optical wavelengths

Figure 4b shows an embodiment wherein the ultrasound emitters 44a-c in an optical fiber device form groups of ultrasound emitters 44a-c on the basis of the optical wavelength at which their tilted FBGs are configured to reflect. The ultrasound emitters 44 within each same-wavelength group are configured to reflect light of the same optical wavelength that is specific for the same-wavelength group. Additionally, the composition of the bodies of photo-acoustic conversion material used in the different groups of ultrasound material may differ to optimize photo-acoustic efficiency at the optical wavelength of the group. Although one optical fiber device is shown, more may be present, preferably all with such same-wavelength groups. Although ultra sound emitters 44a-c from three same wavelength groups are shown, fewer or more groups may be used.

Such same wavelength groups may be used with a light source system 48 that is configured to produce a plurality of pulses of light, each at the wavelength of a different same wavelength group. By way of example such a light source system 48 may comprise a plurality of light sources 48a-c, and a control circuit 480 to control emission of light pulses from light sources 48a-c. Each of light sources 48a-c is configured to produce light with the optical wavelength of a different same wavelength group. All light sources 48a-c are coupled to optical fiber 42 (an optical combiner may be used for this, but for the sake of illustration direct connections are shown). In this way the number of ultrasound emitters 44 within the optical fiber 42 can be increased without reducing the reflected intensities that are used to generate ultrasound. For this purpose, the light pulses of all wavelengths may be transmitted simultaneously over the optical fiber 42. If more than one optical fiber 42 is used, the pulses may be transmitted to all these optical fibers 42. Optionally, control circuit 480 may be configured to relative timing of light pulses.

Although figure 4b shows an embodiment using a plurality of pulsed light sources, it should be noted that alternatively one or more electronically tunable light sources may be used, and/or that one or more electronically controlled optical shutters between the light sources or light source may be used to create the pulses, and/or that an electronically controlled optical switch or switches may be used to couple the light sources to the optical fiber successively.

The location of ultrasound emitters 44 of different same wavelength groups may be interleaved as shown, or different sections of optical fiber 42 may each contain ultrasound emitters 44 of same group only. The number of ultrasound emitters 44 used in the same group in the same optical fiber 42 may be at least three and at most ten for example. Thus, if there are M same wavelength groups (M at least two) an optical fiber may contain up to MxN ultrasound emitters 44. As in the case of a single same wavelength group the reflected fractions of those successive ultrasound emitters 44 that are configured to reflect at the optical wavelength in a same wavelength group may be made to increase with the position of these ultrasound emitter 44 in the same wavelength group, so as to compensate at least partially for the reduction of the light intensity of light at the optical wavelength of the same wavelength group along optical fiber 42 that is used to generate ultrasound. For example, the fraction may be f(n)=1/(N-n), where reflected fractions "f(n)" at successive positions "n" within the same group and "N" is the number of ultrasound emitters 44 used in the same group in the same optical fiber 42.

### Overlapping optical spectral ranges

In an embodiment, the optical spectral ranges in which the tilted FBGs of the different same-wavelength groups reflect light for ultrasound generation do not overlap. This may be used to control exclusive ultrasound emission from selected groups. But in other embodiments these optical spectral ranges may have some overlap, although the wavelengths at which their reflection peak are different. In an embodiment the wavelengths at which the reflection of the different same wavelength groups peak are at least so far distant that the reflection is at least twice that of other same wavelength groups. The overlap does not hinder ultrasound detection. By using this to allow some overlap the number of same wavelength groups can be increased.

In some embodiments, the spacing between successive ultrasound emitters along the optical fiber of the fiber optic device may be selected to enable inspection of a large range of positions in the solid structure under inspection, the spacing between successive ultrasound emitters along each optical fiber may be as large as possible without creating uninspectable regions. In another embodiment, the fiber optic device may comprise a plurality of more narrowly spaced ultrasound emitters along a same optical fiber instead of each single far distant ultrasound transmitter.

### Configurable spectra

In another embodiment, ultrasound emitters 44 of different same wavelength groups may be used to make the emitted ultrasound spectra configurable. In this embodiment, the bodies 24 of photoacoustic materials are configured to provide for different predetermined ultrasound spectra in different ultrasound emitters 44. Differences between the predetermined ultrasound spectra may be realized by using bodies 24 of different size and/or shape and/or by using bodies with material with different properties (e.g. different stiffness) in the ultrasound emitters. Furthermore in this embodiment the optical wavelengths at which tilted FBGs 22 of these ultrasound emitters reflect light may be made different.

This makes it possible for the light source system to shape the emitted ultrasound spectrum, by transmitting light pulses at different combinations of (strength of) optical wavelengths at which tilted FBGs 22 of these ultrasound emitters reflect light. This may be used to extend the ultrasound wavelength range that is transmitted in the structure under inspection, making it possible to detect more deviations in the structure.

The light source system may transmit such light pulses simultaneously or substantially simultaneously. The bodies 24 of photoacoustic materials that are configured to provide for different predetermined ultrasound spectra may be located along a short section of the optical fiber. Each of the predetermined ultrasound spectra may be used for a plurality of bodies 24 that all provide for the same ultrasound spectrum, each in a respective different section, so that each section contains bodies with predetermined ultrasound spectra. Thus, the same configurable spectra may be emitted simultaneously from all sections of the optical fiber. The more closely the ultrasound emitters are located in a section along optical fiber 20, the better approximation of a single source with such an adaptable spectrum will be obtained. For example, positions of ultrasound emitters in a section for use in such pulse shaping may be successively less than an average wavelength of the emitted ultrasound apart from each other, and preferably at most half an average wavelength apart.

### Directional ultrasound emission pattern

In an embodiment, the fiber optic device may comprise a plurality of narrowly spaced ultrasound emitters along a same optical fiber, to create a directional emission pattern over a narrowed range of angles with respect to the direction of the optical axis of the optical fiber. Preferably, the distance between the ultrasound emitters in a section is less than the average ultrasound wavelength of the emitted ultrasound wavelength spectrum (further referred to as the average emitted ultrasound wavelength). The spacing is at least so narrow that the emitters are spaced so closely that the ultrasound emitted from these ultrasound emitters is of comparable strength over a region along the length of the optical fiber.

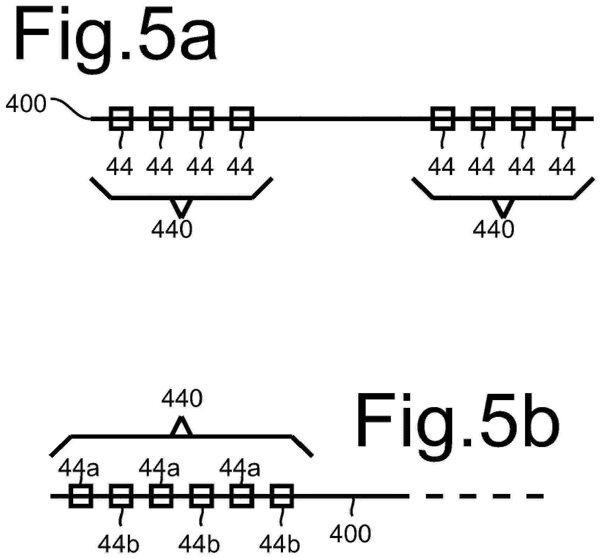

By way of example, figure 5a shows a fiber optic device comprising sections 440 of ultrasound emitters 44 along an optical fiber 100 (preferably a single mode optical fiber) that are spaced by down to half the average emitted ultrasound wavelength apart within each section 440 of the optical fiber of the fiber optic device, or an even smaller distance. That is, although the length of the section may be longer than an average acoustic wavelength, successive positions within the section where light is coupled out from the optical fibers are successively not more than an average acoustic wavelength, and preferably at most half the average acoustic wavelength apart from each other. The distance between different sections 440 is much larger than the length of the section, typically much larger than the distance that is shown in figure 5a for the sake of illustration. For ultrasound frequencies in the range of 0.1 to 1 Mhz, the wavelength may be in the range of 5 to 50 millimeters and the distance between sections may be at least twice and preferably ten times as large as the average ultrasound wavelength. As noted, the average emitted ultrasound wavelength or ultrasound wavelength range from the ultrasound emitters may be controlled by the size and/or shape of the body of light absorbing material. In different embodiments of such a fiber optic device with closely spaced ultrasound emitters, the fiber optic device may or may not include ultrasound receivers.

When a set of the ultrasound emitters 44 is excited with relative time delays that are selected so that the times of arrival of the starts of acoustic signals generated by the optical pulses from the set coincide at a point in the solid structure in the reference direction from said section, the acoustic waves in the reference direction will add up at that point. Thus, the directional emission pattern will peak in that reference direction. The travel times from the photo-acoustic conversion material where the acoustic signal is generated from each optical fiber to the point may be computed e.g. by simulation, and the relative time delays may be selected to compensate for the differences between these time delays.

The time delays involve acoustic propagation in the fiber bundle followed by propagation in the solid structure with the speed of sound in the fiber bundle and the solid structure respectively. Ray path modeling may be used. If the speed of sound in the optical fibers in the fiber bundle and/or the other material in the bundle differs from that in the solid structure or from each other, ray path may be used that refract at the surface of the fiber bundle or even within the fiber bundle.

For example, the photo-acoustic conversion material of ultrasound emitters 44 may lie on the virtual direction line and the relative time delays may be equal to the distances between the positions of the ultrasound emitters 44 divided by the speed of sound in the medium. The medium may be the bulk of the structure, such as the wind turbine vane, but it could also be a local medium added around the optical fiber.

As another example, excitation with zero relative time delay of the ultrasound emitters 44 at less than an average emitted ultrasound wavelength distant in a section 440 has the effect of concentrating the emitted ultrasound in a broadside directional pattern around the section 440 that is narrower than the emission pattern from a single ultrasound emitter 44 in isolation. As shown in figure 5a, successive sections 440 remote from each other may be used, each with a plurality of ultrasound emitters.

As further example the reference direction may form a non-zero angle of less than ninety degrees with the axial direction of the optical fiber. In this case, the directional emission pattern peaks in a cone around the axial direction of the optical fiber.

In another embodiment, predetermined relative time delay between ultrasound emitted by different ultrasound emitters in a section may be created by using bodies that comprise the photo-acoustic conversion material at least nearest the optical fiber and have surfaces at different radial distances from the optical fiber. In this case the time delay depends on the distance between the optical fiber and the surface, and by using such ultrasound emitters with increasing or decreasing time delays at successive positions along the optical fiber, ultrasound waves in a predetermined direction can be made to add up. The bodies may be completely made up of the photo-acoustic conversion material that is used to excite vibration, but alternatively another material may be added at greater distance from the optical fiber to adapt the time delays.

In a structure of limited size the directional ultrasound emission pattern can be used to excite selected ultrasound wave modes or combinations of ultrasound wave modes. When the size of the structure is small in some directions, e.g. in an elongated structure like a turbine wind vane that has a large size mainly in the length direction, the ultrasound wave mode intensity of the selected wave mode(s) may decay only weakly with distance along the direction(s) with the longest size.

In an embodiment, each section 440 may contain only ultrasound emitters that are excited by light pulse at the same optical wavelength. Thus, the section or sections from which ultrasound is emitted transmits light of a selected optical wavelength only. In another embodiment, successive sections 440 each contain ultrasound emitters from a different same-wavelength group. In this embodiment, the light source system may be configured to generate pulses at the different optical wavelengths at sufficiently separated time points to enable separate measurements from using emitted ultrasound from different sections.

Figure 5b shows an embodiment of a fiber optic device with a section 440 wherein ultrasound emitters 44a from a first wavelength group of ultrasound emitters and ultrasound emitters 44b of a second, different same-wavelength group are used alternately along a single fiber in such a section, e.g. spaced by no more than half a wavelength. Although ultrasound emitters 44a, b from two different same-wavelength groups are shown within section 440, it should be noted that ultrasound emitters from more different same-wavelength groups may be used within the same section.

In this embodiment the light source system may be configured to supply a set of light pulses at the optical wavelengths of the different same-wavelength groups with adjustable relative delays with respect to each other. This controls the delays between pulse excitation of the ultrasound emitters in the different same-wavelength groups, which can be used to create directivity patterns that peak at an adaptable angle with the direction of the optical fiber along the section 440.

In an embodiment, a plurality of such sets of optical pulses may be transmitted successively, with respective sets having relative time delays between the optical pulses, corresponding to respective different reference directions. Thus the peak direction of the directional ultrasound emission pattern can be varied. In an embodiment, the relative delays in the respective sets may be chosen to provide for a scan over a range of peak directions. For example, the range may include at least five degrees and more preferably at least ten degrees from the axial direction of the optical fiber. In another embodiment, this may be used to aim the peak at a location of interest.

A control circuit coupled to a light source that feeds the pulses to the optical fiber may be used to control the relative delays for the different sets of pulses based on a stored table of predetermined sets of relative time delays for different reference directions. Alternatively, the control circuit may compute the relative time delays each time from a respective reference direction.

In the embodiments wherein a directional ultrasound emission pattern is emitted, the other described measures, such as using emission from a plurality of sections and reception by FBGs, using more than one optical fiber and configuring the ultrasound spectrum may be used as well.

When applied embedded in an elongated structure like a wind turbine vane, the directional ultrasound emission pattern cause concentration of ultrasound intensity in regions of the elongated structure, e.g.in bands that wind helically around the length axis of the structure or bands that extend parallel to the length axis over part of its circumference, or in bands around the length axis that extend over part of its length. When ultrasound wave mode patterns are excited, the concentrated intensity may decay only weakly with distance from the optical fiber. The concentration of ultrasound intensity provides for an improved signal to noise ratio and the ability to locate possible defects and/or to classify the type of defect, which may make it possible to judge whether the defect requires further action or not. When a defect shows up when using an directional ultrasound emission pattern that is concentrated in a particular direction, it may be concluded that the defect lies in that direction.

### Fiber bundles

In other embodiments, a fiber optical device is used that comprises a bundle of optical fibers (preferably single mode optical fibers) embedded in a solid structure like a wind turbine vane instead of a single optical fiber as described in the preceding. This provides for embodiments with effects that cannot be achieved with an individual (single mode) optical fiber. But it should be noted that the measures described in the preceding using an individual optical fiber, such as use of receiving FBGs between a plurality of ultrasound emitters, use of the end of an optical fiber for an additional ultrasound emitter etc, may be used for an optical fiber in a bundle as well, and that some of the possible effects of bundles may not require any of the described measures described for an individual optical fiber in the preceding.

As used herein, the term "bundle" refers to fixed close spacing between the (single mode) optical fibers in the bundle, optionally with locations along the bundle, such as at one of its end, where the optical fibers are less closely spaced and/or not at a fixed spacing. Preferably, the bundle also comprises binding material surrounding the optical fibers, and the bundle may contain other types of optical fiber. In a number of embodiments, the optical fibers in the bundle are preferably at most the average emitted ultrasound wavelength of the ultrasound emitters apart from their nearest neighbors, and preferably at most half the average emitted ultrasound wavelength. In other embodiments the distance between the optical fibers may be much larger.

The optical fibers in the fiber bundle may be arranged along a single line or in a two-dimensional arrangement, as seen in projection on a cross-section perpendicular to the axial direction of the fiber bundle, for example in a one or two dimensional periodic array.

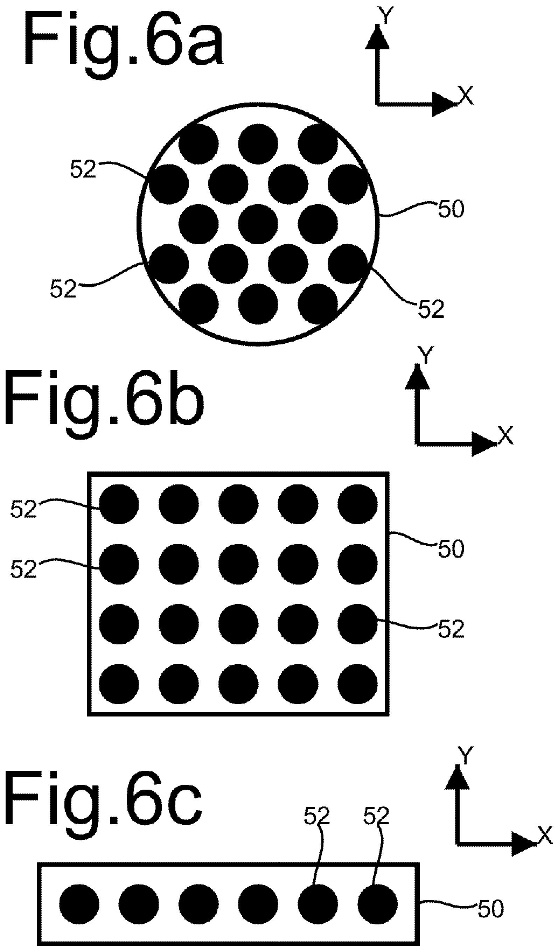

Figure 6a-c show cross-sections of bundles 50 containing individual single mode optical fibers 52, wherein the fibers lie in a two dimensional hexagonal pattern, in a two dimensional rectangular pattern and in a one dimensional planar pattern respectively. The projections on the axial direction of positions where light is coupled to the photo-acoustic conversion material may coincide, or be distributed over a range of axial positions.

A directional spatial acoustic emission pattern can be realized within a solid structure that peaks in a single three dimensional direction. For example emission may be created from positions distributed over a two dimensional area such as in the cross-sections shown in figure 6a,b (as used herein, distributed over a two dimensional area means that the position in the projection are not on a single line, but e.g. evenly distributed within a circle or square). Such a directional spatial acoustic emission pattern can even be realized from positions on a single line (a one dimensional area such as shown in figure 6c), when the projections on the axial direction of positions where light is coupled to the photo-acoustic conversion material are distributed over a range of axial positions.

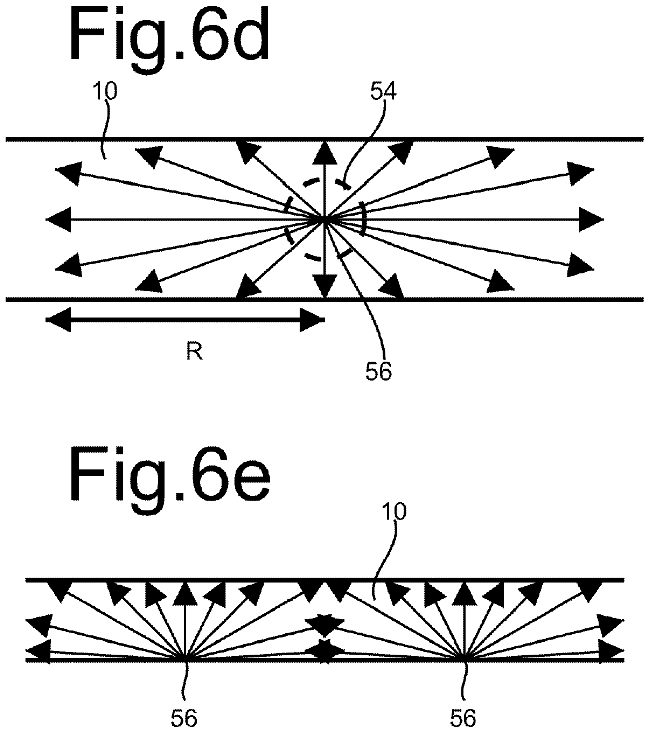

By using adaptable directional patterns through the solid structure generated from an axial section of a bundle of optical fibers an inspection resolution and signal to noise ratio can be realized. This is illustrated in figure 6d, wherein arrows indicate reference directions of different directional emission patterns from the position 56 of the section of the bundle where acoustic signals are generated in the solid structure 10. " R" indicates the distance from the section over which the acoustic signal strength in the direction of the maximum of the directional emission patterns drops off to a level needed to achieve a given signal to noise ratio with the plurality of positions that is used to generate the pattern. This distance R is larger than the distance, an example of which is indicated by circle 54, over which an omnidirectional pattern with the same overall acoustic power drops off to a level needed to achieve the same signal to noise ratio (the difference between the distances depends on the directionality of the pattern and the number of emitters). Hence, when omnidirectional emission would be used, a greater number of distributed emission positions would be needed than the single position of the section in the bundle.

Figure 6e shows an embodiment wherein a plurality of sections at different positions 56 along the solid structure is used. Thus better coverage can be achieved. For example, if the distance R is to small to cover the solid structure from a section at a single position, sections at a distance of about twice R may be used (e.g. between R and 190% of R).

In an embodiment, the plurality of reference directions indicated by the arrows may be parallel to a surface of the solid structure nearest the section of the fiber bundle and distributed over a range of angles with respect to an axial direction of the bundle in the section (as used herein, "distributed over a range of angles" means that angles at the bounds of the range and at least one angle between these bounds are included, preferably, but not necessarily at equal angle distances). Thus the surface of the solid structure can be inspected. Preferably, the differences between the angles in said range are equal to or smaller than the angle width of the direction dependent acoustic emission patterns, so that no inspection gaps arise. As shown, the reference directions in said range may fan out to points distributed over a full width of the solid structure 10 (in figure 6d, the width of solid structure 10 corresponds to the height direction in figure 6d). Thus, measurements according to a discrete angle scan over the surface can be realized using a single fiber bundle.

For example, for a wing shaped solid object such as a wind turbine vane, a leading edge surface of the wing may be nearest the section of the bundle with the optical fibers with photo-acoustic emitters, and the optical fibers in the bundle directed along the length of the wing and reference directions in a range that includes the length direction along the wing. As another example, a surface between the edge and the trailing edge of the wing may be nearest the section a wing shaped solid object such as a wind turbine vane, a leading edge surface of the wing may be nearest the section of the bundle with the optical fibers with photo-acoustic emitters, with the optical fibers in the bundle directed along the length of the wing or transverse to it.

In the embodiment of a wing shaped solid object and a section near the leading edge, the angles (shown by the arrows of figure 6d) may fan out so that, beyond some distance from the section, the range of directions reaches the surface around the leading edge up to a full width where opposite surface parts of the wing are perpendicular to the surface part at the leading edge. Similarly, with the section near a surface between the edge and the trailing edge of the wing, the angles may fan out so that, beyond some distance from the section, the range reaches up to a full width between the leading edge and the trailing edge of the wing. Thus the number of places where emitters are present may be reduced.

Under some circumstances, the acoustic emission pattern from individual acoustic emitters may be direction dependent themselves, e.g. with weak emission in some directions. This may mean that it is advantageous not to use such an acoustic emitters as one of a plurality of emitters in a section for generating a directional emission pattern that is intended to peak in its direction of weak emission. In particular it may be avoided to use reference directions from a section that are directed in such a direction of weak emission. Thus, there will be no strong emission to certain regions in such a direction from the section. Instead, another section or sections, from which these regions do not lie in such a direction of weak emission may be used to emit acoustic signals to these regions.

Optical fibers 52 in bundle 50 may be kept at fixed relative positions to each other by a matrix of connecting material and/or by a surrounding layer of material around optical fibers 52 in bundle 50. In an embodiment wherein the solid structure wherein the optical fiber device is embedded is made of structural fibers in a resin, the same resin may be used to fix the relative positions of optical fibers 52. In a further embodiment optical fibers 52 of bundle 50 may be laid up on the structural fibers, as yet not fixed to each other, in between laying up different structural fiber layers, the application of resin to the structural fiber layers being used to fix the relative position of optical fibers 52 as well. In other embodiments, multimode optical fibers may be used instead of single mode fibers.

Use of a bundle 50 of optical fibers with ultrasound emitters in more than one of these optical fibers makes it possible to generate a directed pattern of ultrasound emission that varies with the component of the direction of emission in the plane orthogonal to the (axial) direction of the optical fiber bundle 50, although this comes at the price of using more optical fibers in the structure under inspection.

By transmitting a set of pulses each through a respective one of optical fibers 52 in bundle 50 with relative time delays between the pulses of the set, a directed pattern of ultrasound emission can be emitted. As described, selected relative time delays may be used for such a set according to a reference direction, corresponding to ultrasound travel times at a speed of sound over distances between projections of the positions on a reference direction in the medium. A plurality of respective sets of pulses, each time delays according to a respective different reference direction may be transmitted successively, e.g. to scan over directed patterns of ultrasound emission with different peak directions.

In another embodiment a bundle 50 of optical fibers with ultrasound emitters in more than one of the optical fibers that are much less than an average acoustic wavelength apart may be used to generate substantially the same pattern of ultrasound emission as a single ultrasound emitter, with increased emission power due to the use of a plurality of fibers. By transmitting a set of pulses each through a respective one of optical fibers 52 in bundle 50 without relative time delays between the pulses of the set, increased emission power can be emitted. This makes it possible to increase the signal to noise ratio.

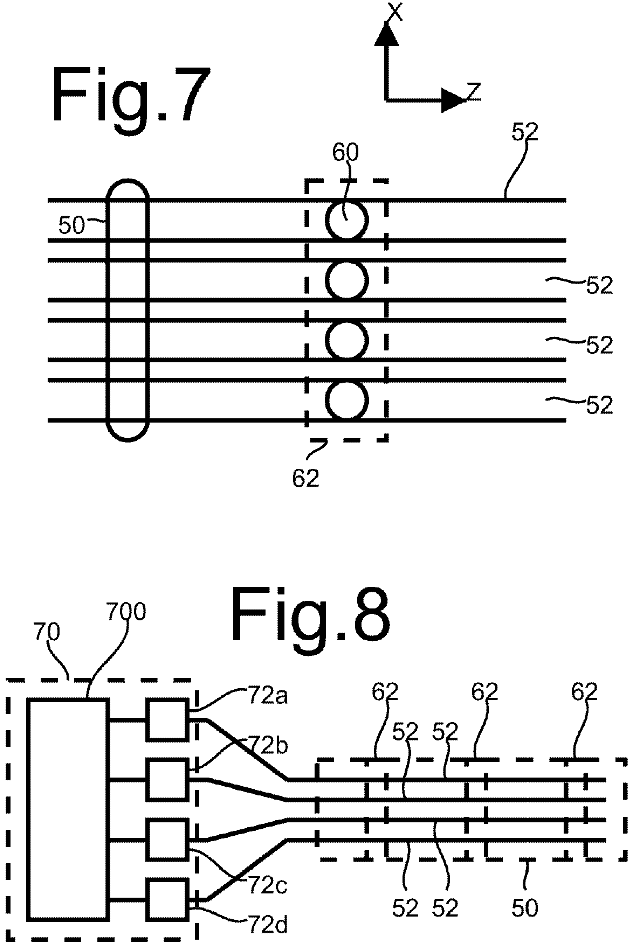

The embodiment wherein a bundle 50 of optical fibers with ultrasound emitters in more than one the optical fibers is used to generate a directed pattern of ultrasound emission can be similarly modified. The emitted power of the directed pattern of ultrasound emission can be increased by using a plurality of clumps of ultrasound emitters in respective optical fibers, each clump instead of a single ultrasound emitter, with the distances between ultrasound emitters in a clump much smaller than the average ultrasound wavelength. In this case optical pulses without relative time delays may be transmitted to optical fibers that contain the ultrasound emitters of such a clump. Figure 7 shows ultrasound emitters 60, symbolized by circles, in each of optical fibers 52 of bundle 50 in a section 62 of bundle 50. The figure may be taken to represent a side view of a planar bundle or a cross-section of a bundle with a two dimensional cross-section. An embodiment with a single ultrasound emitter 60 in each of optical fibers 52 in section 62 of bundle 50 is shown, located at the same axial position. However it should be appreciated that the axial positions of ultrasound emitters 60 in the same section 62 in different optical fibers 52 of bundle 50 may differ (successive positions preferably being not more than half the average ultrasound wavelength apart), and that in at least part of optical fibers 52 in bundle 50 more than one ultrasound emitter 60 may be present in the same section 62.

In an embodiment the control circuit may be configured to obtain acoustic reflection measurements in response to acoustic signals for the reference directions and use these measurements to determine one or more inspection directions for further inspection. For example an inspection direction may be a direction of largest acoustic reflection, which may be due to a defect. As inspection direction the measurement direction that resulted in the largest reflection or an interpolation between the measurement directions may be used, e.g. weighted according to their measured acoustic reflection measurement results.

In another embodiment, the control circuit may be configured to direct the inspection directions successively to the locations of different distant receivers, such as a Fiber Bragg Gratings (FBGs) in an optical fiber elsewhere in the fiber bundle or outside the fiber bundle. Thus the acoustic inspection signal strength at the receivers may be increased.

Figure 8 schematically shows a system with a bundle 50 of optical fibers 52 and a light source system 70. A plurality of sections 62 as described with reference to figure 7 are schematically shown to be present in bundle 50. Different sections 62 are far more than the average ultrasound wavelength along bundle 50 apart, e.g. more than a hundred millimeter or a meter when the average emitted ultrasound wavelength is at most ten millimeter. Light source system 70 comprises a plurality of light sources 72a-d and a control circuit 700 coupled to light sources 72a-d. Light from each one of light sources 72a-d is coupled to a respective one of optical fibers 52 in bundle 50. Control circuit 700 is configured to cause light sources 72a-d to emit light pulses with controllable relative time differences between the light pulses from different light sources 72a-d.

Although figure 8 shows an embodiment using a plurality of pulsed light sources, it should be noted that alternatively one or more electronically controlled optical shutters between a common source and the respective ones of optical fibers 52 may be used to create the pulses on the optical fibers, and/or that an electronically controlled optical switch or switches may be used to couple the light sources to the optical fibers successively.

In operation, the relative time differences between the light pulses from different light sources 72a-d may be used to generate a directed pattern of ultrasound emission that varies with the component of the direction of emission in the plane orthogonal to the (axial) direction of the optical fiber bundle 50.

As shown, each optical fiber 52 in bundle 50 may be coupled to a respective different one of light sources 72a-d and the optical fibers 52 in sections 62 may all be different. In another embodiment, one or more optical fiber 52 may loop back through bundle 50, so that such an optical fiber runs back and forth through a section 62. Such an optical fiber may even loop back repeatedly or even constitute all of the optical fibers in bundle 50. When an optical fiber loops back, it may have two ends at the side of light source system 70. In this case only one of the ends of such an optical fiber may need to be connected to a light source at the side of light source system 70.

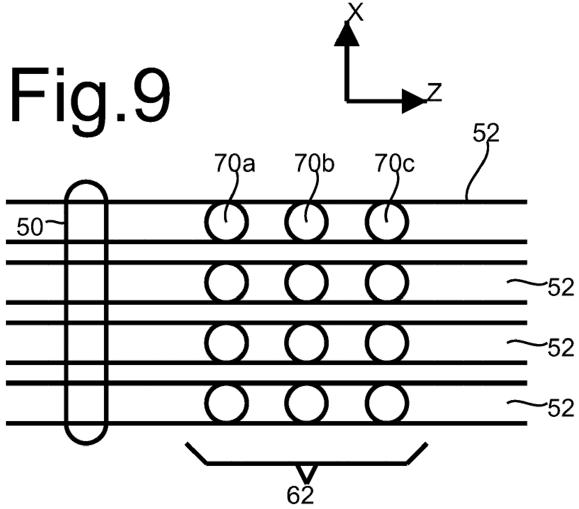

Figure 9 shows a bundle 50 with a plurality of ultrasound emitters 60 in each of optical fibers 52 of bundle 50 in a section 62 of bundle 50. In an embodiment, the different ultrasound emitters in a same section 62 within each optical fiber 52 may belong to different optical wavelength groups. In this embodiment, the light source system may comprise a plurality of light sources for each of optical fibers 52, configured to produce light at respective ones of the optical wavelengths of the different optical wavelength groups in that optical fiber 52. The control circuit may be configured to cause the light sources to emit light pulses at the optical wavelengths of the different optical wavelength groups within that optical fiber 52 with controllable relative time differences with respect to each other. Similarly, the control circuit configured to control the relative time differences between pulses in the different optical fibers 52.

In operation the relative timing of the light pulses from the different optical wavelength groups within the optical fibers 52 can be used to generate a directed pattern of ultrasound emission that varies with the components of the direction of emission in the axial direction of bundle 50 and in a direction or directions perpendicular to that axial direction. Thus this pattern can be made dependent on the three dimensional direction of ultrasound emission relative to the bundle.

It should be noted that this possibility is not limited to embodiments wherein all ultrasound emitters along each optical fiber 52 within a section belong to different optical wavelength groups. Alternatively, part of the ultrasound emitters in a section 62 along one or more of optical fiber 52 may belong to a same optical wavelength group.

In another embodiment, the different ultrasound emitters within a section 62 may belong to the same optical wavelength group, the ultrasound emitters in successive sections 62 belonging to different optical wavelength groups. This makes it possible to emit directed ultrasound patterns from selected sections. In a combination of such embodiments , the different ultrasound emitters within a section 62 may belong to the different optical wavelength within an optical wavelength sub-group, the ultrasound emitters in successive sections 62 belonging to different optical wavelength sub-groups.

Similarly, when the bundle contains a large number of optical fibers (preferably single mode optical fibers), selections can be made by supplying light pulses only to different sub-sets of fibers. This can be used to shape the directional pattern in more detail. Thus, for example, a first sub-set of selected optical fibers and/or selected groups can be used to create a narrower part of the directional pattern and a second sub-set of selected optical fibers and/or selected groups can be used to add a broader part of the directional pattern.

Preferably, the bundle also contains ultrasound receivers implemented as non-tilted FBGs in the fiber core of an optical fiber in the bundle. Such ultrasound receivers may be present in any of the optical fiber in the bundle, for example in an optical fiber in the bundle that does not contain any ultrasound emitters, or in one or more optical fibers that also contain ultrasound emitters.

The use of a bundle improves the flexibility with which directional ultrasound emission pattern can be created and/or the directionality of these patterns. Thus, it improves the ability to concentrate ultrasound intensity, with the effect that defects can be better detected and judged.

## Claims

1. A solid structure comprising
- an at least partly embedded optical fiber comprising at least a part embedded in the solid structure and an accessible end of the embedded optical fiber accessible from outside the structure,
- a plurality of photo-acoustic ultrasound emitters distributed along the embedded part, each of the ultrasound emitters comprising photo-acoustic conversion material adjacent the optical fiber at least at position of the photo-acoustic ultrasound emitter along the optical fiber where the embedded optical fiber is configured to couple a non-zero fraction of intensity of light travelling in the embedded optical fiber out of the embedded optical fiber to said photo-acoustic conversion material,
- the optical fiber furthermore comprising acoustic sensing regions in between said positions.

2. A solid structure according to claim 1, comprising
- a further optical fiber having at least a part embedded in the solid structure distant from said embedded optical fiber, the further optical fiber having an accessible end accessible from outside the structure,
- a plurality of further photo-acoustic ultrasound emitters distributed along said part of a further optical fiber, at positions where the further optical fiber is configured to couple a non-zero fraction of the light travelling in the further optical fiber out of the further optical fiber,
- the further optical fiber furthermore comprising further acoustic sensing regions in between said further positions.

3. A solid structure according to any of the preceding claims, wherein the solid structure is a laminated structure and said part of the embedded optical fiber is embedded between successive layers of the laminated structure.

4. A solid structure according to any of the preceding claims, wherein the photo-acoustic ultrasound emitters are present in axial sections of the optical fiber, each of the sections comprising the positions of a plurality of said photo-acoustic ultrasound emitters, the optical fiber having length ranges that extend between successive ones of the sections and wherein no other of said positions are present in the length ranges, the length ranges being at least ten times longer than the average emitted ultrasound wavelength, wherein the length sections are shorter than the length ranges.

5. A solid structure according to claim 4, wherein the embedded optical fiber comprises tilted Fiber Bragg Gratings, FBGs, in a fiber core of the embedded optical fiber at said positions, the tilted FBGs comprising at least two groups of tilted FBGs, each group being associated with a respective different optical wavelength, the tilted FBGs in each group being configured to reflect said fractions of light with the optical wavelength associated with the group to the photo-acoustic conversion material in a respective one in the photo-acoustic ultrasound emitters.

6. A solid structure according to claim 5, wherein each of the sections comprises tilted FBGs from different ones of the groups.

7. A solid structure according to claim 5, wherein successive ones of the sections are associated with different ones of the groups, each section comprising a plurality of the FBGs from the group that is associated with the section.

8. A solid structure according to claim 4, wherein the photo-acoustic emitters in at least one of the length sections are configured to produce mutually different ultrasound spectra.

9. A solid structure according to claim 4, wherein distances between the fiber core of the optical fiber and a radially outward surface of the photoacoustic conversion material of the photo-acoustic ultrasound emitters in at least one of the length sections only increases or only increases with increasing distance from the accessible end of the optical fiber within the length section.

10. A solid structure according to any of the preceding claims, wherein the embedded optical fiber is configured to couple successively greater fractions of the light travelling through the embedded optical fiber at successive ones of said positions out of the embedded optical fiber to the photo-acoustic conversion material.

11. A solid structure according to claim 10, wherein for an integer number, N, of the successive ones of the positions the fractions equal 1/(N-n), wherein n is a rank number of the successive ones of the positions

12. A solid structure according to any of the preceding claims, the solid structure having an elongated shape extending around an axial direction between a first and second end of the structure, the embedded optical fiber being embedded substantially encircling the axial direction.

13. A solid structure according to claim 12 wherein said part of the embedded optical fiber is embedded substantially encircling the axial direction adjacent the first end of the structure.

14. A solid structure according to any of claims 1-11, the solid structure having an elongated shape extending around an axial direction between a first and second end of the structure, said part of the embedded optical fiber being embedded extending along the axial direction.

15. A solid structure according to any of the preceding claims, comprising a further photo-acoustic ultrasound emitter, comprising further photo-acoustic conversion material located at an embedded end of the embedded optical fiber, the embedded optical fiber being configured to supply light from the embedded end to the further photo-acoustic conversion material.

16. An inspection arrangement comprising the solid structure according to any of the preceding claims and a light source system coupled to the accessible end of the embedded optical fiber, wherein the light source system is configured to supply light pulses for photo-acoustically exciting ultrasound to the accessible end of the embedded optical fiber.

17. An inspection arrangement comprising the solid structure according to claim 15, wherein the light source system is configured to supply light pulses at the optical wavelengths of the groups within a time interval that is sufficiently short to ensure temporal overlap of ultrasound from the photo-acoustic conversion material that is coupled to FGBs of different ones of the groups.

18. A method of inspecting the solid structure of any one of the preceding claims for defects, the method comprising transmitting a light pulse through the embedded optical fiber from its accessible end, causing the photo-acoustic ultrasound emitters to emit ultrasound due to photoacoustic conversion, and using the acoustic sensing regions to detect ultrasound received in response to said ultrasound.

19. A method of inspecting the solid structure of claim 2, the method comprising transmitting light pulses through the embedded optical fiber and the further optical fiber from their accessible ends respectively, causing the photo-acoustic ultrasound emitters of the embedded optical fiber and the further optical fiber to emit ultrasound due to photo-acoustic conversion, and using the acoustic sensing regions of the further optical fiber and the embedded optical fiber to detect ultrasound received in response to the ultrasound emitted by the embedded optical fiber and the further optical fiber respectively.
